# EUROPÄISCHE PATENTSCHRIFT

(11) **EP 1 336 056 B1**
(45) Veröffentlichungstag und Bekanntmachung des Hinweises auf die Patenterteilung: **17.08.2005**
(21) Anmeldenummer: 01990427.5
(22) Anmeldetag: 21.11.2001
(51) Int. Cl.: F16H 3/44

(54) **ALLRADVERTEILERGETRIEBE FÜR EIN KRAFTFAHRZEUG**
ALL-WHEEL DISTRIBUTOR GEARBOX FOR A MOTOR VEHICLE
TRANSMISSION INTEGRALE A REPARTITION POUR VEHICULE A MOTEUR

(30) Priorität: 23.11.2000 DE 10058198
(43) Veröffentlichungstag der Anmeldung: 20.08.2003
(73) Patentinhaber: ZF FRIEDRICHSHAFEN AG, 88038 Friedrichshafen (DE)
(72) Erfinder: GAZYAKAN, Ünal, 88045 Friedrichshafen (DE); BAASCH, Detlef, 88048 Friedrichshafen (DE); GUMPOLTSBERGER, Gerhard, 88045 Friedrichshafen (DE); EBENHOCH, Michael, 88045 Friedrichshafen (DE); SCHMOHL, Barbara, 88048 Friedrichshafen (DE)
(86) Internationale Anmeldenummer: PCT/EP2001/013504
(87) Internationale Veröffentlichungsnummer: WO 2002/042663

(56) Entgegenhaltungen:
- EP-A- 0 943 479
- US-A- 4 804 061

## Beschreibung

Die Erfindung betrifft ein Allradverteilergetriebe für ein Kraftfahrzeug nach der im Oberbegriff des Patentanspruchs 1 näher definierten Art.

Bei aus der Praxis bekannten Allradverteilergetrieben für Kraftfahrzeuge wird ein Planetensatz als Übersetzungsstufe für einen zuschaltbaren Geländegang und eine regelbare Sperre zur Sperrung zwischen einer Vorderachse und einer Hinterachse des Kraftfahrzeuges über zwei separate Aktuatoren beziehungsweise Elektromotoren getrennt voneinander betätigt.

Derartige Allradverteilergetriebe mit Einrichtungen zum Betätigen einer Geländegangschaltung sowie einer regelbaren Sperre weisen jedoch den Nachteil auf, daß sie einen großen Bauraum benötigen und der generellen Anforderung in der Kraftfahrzeugtechnik in bezug auf eine Gewichtsreduzierung zur Minimierung des Kraftstoffverbrauches entgegenwirken.

In der US 6,022,289 wird ein Allradverteilergetriebe eines Kraftfahrzeuges nach dem Oberbegriff des ersten Anspruchs beschrieben, bei welchem eine Geländegangschaltung und eine Sperre über eine gemeinsame Antriebseinrichtung betätigt werden. Dabei wird die als Lamellensperre ausgebildete Sperre von einem Aktuator der Antriebseinrichtung über einen Hebelarm von einer offenen Stellung in eine geschlossene Stellung, und dabei in eine einen Vorderradantrieb mit einem Hinterradantrieb sperrende Stellung, gebracht. Eine Betätigung der Geländegangschaltung erfolgt über eine Kurvenscheibe, welche einen von dem Aktuator ausgehenden rotatorischen Antrieb in eine translatorische Bewegung bzw. Betätigung der Geländegangschaltung umwandelt.

Das Öffnen und das Schließen der Sperre und die Zu- bzw. Abschaltung des Geländeganges erfolgt hierbei über die jeweils damit korrespondierende Drehrichtung des Aktuators bzw. des Elektromotors. Das bedeutet, daß beispielsweise eine Rechtsdrehung des Elektromotors eine Verstellung des Geländeganges in eine Schaltposition bzw. eine Verstellung der Lamellensperre in eine Schließstellung bewirkt. Das Abschalten des Geländeganges oder ein Entsperren der Lamellensperre wird beispielsweise durch eine Linksdrehung des Elektromotors bewirkt.

Nachteilig ist dabei jedoch, daß die für eine Betätigung der Lamellensperre und der Geländegangschaltung über deren jeweilig gesamten Betriebsbereich erforderlichen verschiedenen Drehrichtungen des Elektromotors ein sogenanntes Umschlagspiel bei der Drehrichtungsumkehr verursachen, welches insbesondere bei der Ansteuerung des Antriebs für die Lamellensperre eine exakte Einstellung eines Anpreßdrucks nur in unbefriedigender Art und Weise ermöglicht.

Weiter ist von Nachteil, daß die Verpressung der Lamellen während des Schließens oder in geschlossener Position der Lamellensperre aufgrund einer Verbiegung des Hebels nicht exakt definierbar ist, da die beim Verpressen der Lamellen die auf die Lamellensperre aufgebrachte Antriebsenergie des Aktuators teilweise durch die Verformung des Hebels als Verlustenergie verbraucht wird und ein exakter Zusammenhang zwischen der Verpressung und dem Drehwinkel des Aktuators bzw. dessen Antriebswelle nicht mehr gegeben ist.

Aufgabe der vorliegenden Erfindung ist es daher, ein Allradverteilergetriebe für ein Kraftfahrzeug zur Verfügung zu stellen, welches einen geringen Bauraumbedarf aufweist und mit dem eine exakte Betätigung einer Geländegangschaltung und einer Sperre des Allradverteilergetriebes durchführbar ist.

Erfindungsgemäß wird diese Aufgabe mit einer Vorrichtung gemäß den Merkmalen des Patentanspruches 1 gelöst.

Mit dem erfindungsgemäßen Allradverteilergetriebe wird der konstruktive Aufwand und die Anzahl der Bauteile vorteilhafterweise reduziert, da die Betätigung der Sperre und der Geländegangschaltung über eine einzige Antriebseinrichtung realisiert wird. Mit der möglichen kompakten und verschleißarmen Bauweise werden in vorteilhafter Weise sowohl Bauraum und Gewicht als auch aufgrund der Reduzierung der erforderlichen Bauteile Kosten eingespart.

Dadurch, daß die Sperre und die Kopplung zum Planetensatz, welcher als Übersetzungsstufe für den zuschaltbaren Geländegang dient, über eine gemeinsame Antriebseinrichtung betätigbar sind und ein Moment der Antriebswelle der Antriebseinrichtung jeweils in Abhängigkeit einer Ansteuerung der Umschalteinrichtung zum Betätigen der Sperre oder der Übersetzungsstufe auf die erste Antriebswelle oder die zweite Antriebswelle der Antriebseinrichtung aufgebracht wird, wird der Aufwand zur Steuerung und Regelung der wechselseitigen Betätigung der Sperre und der Geländegangschaltung erheblich vereinfacht. Dieser Vorteil ergibt sich durch die Tatsache, daß lediglich eine Maschine, wie beispielsweise ein Elektromotor der Antriebseinrichtung, das Antriebsmoment erzeugt und lediglich die Umschalteinrichtung zur Umleitung des Antriebsmomentes von der Antriebswelle auf eine der beiden Abtriebswellen angesteuert wird.

Weitere Vorteile und vorteilhafte Ausgestaltungen der Erfindung ergeben sich aus den Unteransprüchen und dem unter Bezugnahme auf die Zeichnung prinzipmäßig beschriebenen Ausführungsbeispiel.
Es zeigen:
- Fig. 1: eine schematische Darstellung eines erfindungsgemäßen Allradverteilergetriebes eines Kraftfahrzeuges mit einer Geländegangschaltung und einer Lamellensperre;
- Fig. 2: eine vereinfachte Darstellung einer Antriebseinrichtung des Allradverteilergetriebes nach Fig. 1, welche mit einem Linearantrieb für die Geländegangschaltung in Wirkverbindung steht;
- Fig. 3: einen Halbschnitt durch die Antriebseinrichtung gemäß Fig. 1 und Fig. 2 mit einer elektromagnetischen Kupplung und einer elektromagnetischen Bremse in Alleinstellung und
- Fig. 4: eine äußerst schematisierte Darstellung des Regelbereiches der Antriebseinrichtung.

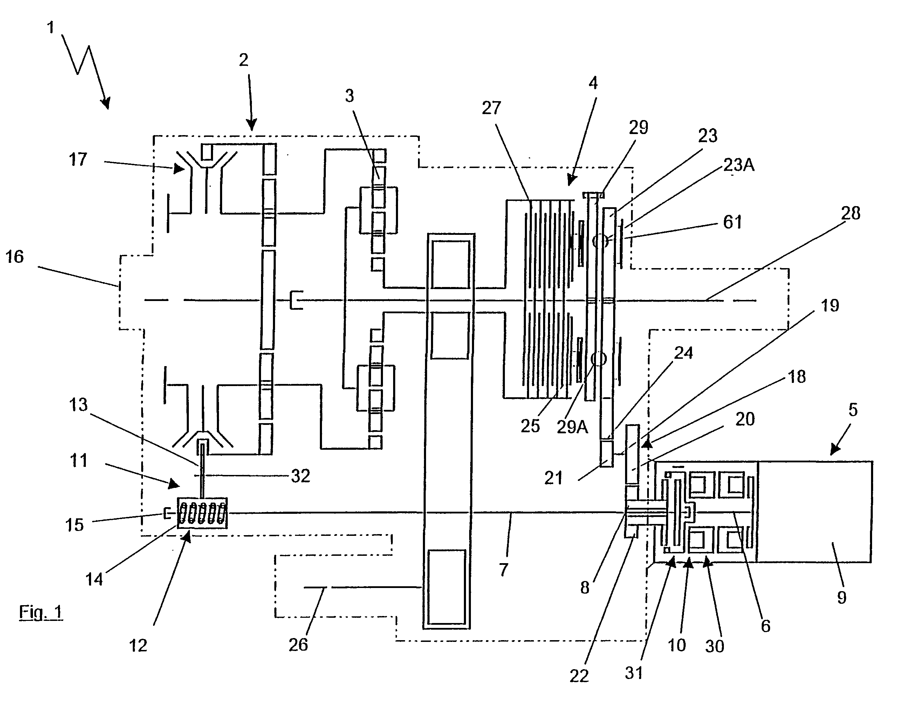

Bezug nehmend auf Fig. 1 ist eine schematische Darstellung eines Allradverteilergetriebes 1 für ein Kraftfahrzeug mit einem ersten Planetensatz als Übersetzungsstufe 2 für einen zuschaltbaren Geländegang und mit einem zweiten Planetensatz 3 mit variabler Teilung für eine Verteilung eines Antriebsmoments auf eine Vorderachse und eine Hinterachse dargestellt. Weiter weist das Allradverteilergetriebe 1 eine regelbare Sperre 4 zur Sperrung zwischen einem Vorderachsabtriebsstrang und einem Hinterradabtriebsstrang auf, wobei die Sperre 4 und die Übersetzungsstufe 2 über eine ansteuerbare Antriebseinrichtung 5 betätigbar sind.

Die Antriebseinrichtung 5 weist eine Antriebswelle 6 und zwei Abtriebswellen 7, 8 auf, wobei die erste Abtriebswelle 7 mit der Übersetzungsstufe 2 und die zweite Abtriebswelle 8 mit der Sperre 4 in Wirkverbindung steht. Die Antriebswelle 6 stellt gleichzeitig eine Ausgangswelle eines Elektromotors 9 der Antriebseinrichtung 5 dar und überträgt im Betrieb des Elektromotors 9 ein Moment, welches in Abhängigkeit einer Ansteuerung einer Umschalteinrichtung 10 der Antriebseinrichtung 5 zum Betätigen der Sperre 4 oder der Übersetzungsstufe 2 von der Antriebswelle 6 auf die erste Abtriebswelle 7 oder die zweite Abtriebswelle 8 bringbar ist.

Die erste Abtriebswelle 7 steht im Bereich ihres der Antriebswelle 6 abgewandten Endes mit einem Linearantrieb 11 in Wirkverbindung, wobei der Linearantrieb 11 einen Kugelgewindetrieb 12 und einen kippbaren Mitnehmer 13 aufweist. Der Kugelgewindetrieb 12 umfaßt eine mit einem spindelartig ausgebildeten Bereich der ersten Abtriebswelle 7 in Eingriff stehende, mehrere Kugeln 14 aufweisende Kugelmutter 15, die bei einer Rotation der ersten Abtriebswelle 7 in deren axialer Richtung verstellt wird und eine Kippbewegung des Mitnehmers 13 bewirkt. Dabei wird bei der gezeigten Ausführung die Kugelmutter 15 bei einer Linksdrehung des Elektromotors 9 in axialer Richtung der ersten Abtriebswelle 7 auf die Antriebseinrichtung 5 zu verschoben und bei einer Rechtsdrehung des Elektromotors 9 in entgegengesetzter Richtung verstellt.

Der Mitnehmer 13 ist in einem Gehäuse 16 des Allradverteilergetriebes 1 kippbar gelagert und mit einer Synchronisierung 17 der Übersetzungsstufe 2 verbunden, wobei eine Kippbewegung des Mitnehmers 13 eine translatorische Bewegung der Schaltmuffe der Synchronisierung 17 bewirkt.

Es versteht sich, daß der Fachmann bei einer alternativen Ausführung auch eine starr mit dem Linearantrieb verbundene, nicht kippbare Gabel anstelle des hier gezeigten Mitnehmers 13 vorsehen kann.

Die zweite Abtriebswelle 8 steht an ihrem der Antriebswelle 6 abgewandten Ende über eine Übersetzungseinrichtung 18 mit der Sperre 4 in Wirkverbindung, wobei die Übersetzungseinrichtung 18 mit einer Welle 19 fest verbundene und im Gehäuse 16 drehbar angeordnete Zahnräder 20, 21 aufweist. Das erste Zahnrad 20 der Welle 19 steht mit einem mit der zweiten Abtriebswelle 8 fest verbundenen Stirnrad 22 in Eingriff.

Die Sperre 4 weist ein Stellrad 23 auf, das mit einem sich teilweise über den Umfang des Stellrades 23 erstreckenden Zahnprofil 24 versehen ist und mit dem zweiten Zahnrad 21 der Welle 19 in Eingriff steht.

Weiter weist die Sperre 4 mehrere axial verschiebliche Lamellen auf, wobei Innenlamellen 25 der Sperre 4 drehfest mit einer Hinterradabtriebswelle 28 des Allradverteilergetriebes 1 und Außenlamellen 27 der Sperre 4 drehfest mit einer Vorderradabtriebswelle 26 des Allradverteilergetriebes 1 verbunden sind.

Zwischen den Lamellenpaketen 25, 27 und dem Stellrad 23 ist ein in dem Gehäuse 16 des Allradverteilergetriebes 1 axial verschiebliches und drehfest angeordnetes, scheibenartiges Stellelement 29 vorgesehen, welches auf seiner dem Stellrad 23 zugewandten Seite spiralförmig ausgebildete Nuten 29A aufweist, deren Tiefe in der Art einer schiefen Bahn bis zu einem maximalen Tiefpunkt stetig zunimmt. Zusätzlich weist das Stellrad 23 auf seiner dem Stellelement 29 zugewandten Seite mit den Nuten 29A des Stellelementes 29 korrespondierende spiralförmige Ausnehmungen 23A auf, wobei zwischen dem Stellrad 23 und dem Stellelement 29 in den Nuten 29A und den Ausnehmungen 23A Wälzkörper 61 geführt sind.

Das Stellrad 23 bildet mit dem Stellelement 29 und den dazwischen angeordneten Wälzkörpern bzw. Kugeln 61 ein Kugel-Rampe-System aus, wobei die Nuten 29A und die Ausnehmungen 23A derart zueinander angeordnet sind, daß eine Rotation des Stellrades 23 ein Abwälzen der Wälzkörper 61 in den Nuten 29A und den Ausnehmungen 23A sowie eine axiale Bewegung des Stellelementes auf die Lamellenpakete 25, 27 zu oder von diesen weg bei axial feststehendem Stellrad 23 bewirkt. Die Rotation des Stellrades 23 wird durch die Übertragung des von der Antriebseinrichtung 5 ausgehenden Antriebsmomentes über die Übersetzungseinrichtung 18 auf das Stellrad 23 bewirkt.

Diese Konstruktion, bei der wenig biegeweiche Teile zum Einsatz kommen, zeichnet sich durch ein sehr vorteilhaftes Hystereseverhalten mit kleiner Hysterese aus, wodurch eine sehr feine Einstellung der Lamellensperre 4 möglich ist.

Die Umschalteinrichtung 10 der Antriebseinrichtung 5 weist eine elektromagnetische Kupplung 30 auf, mit welcher ein Kraftfluß zwischen der Antriebswelle 6 und der ersten Abtriebswelle 7 oder der zweiten Abtriebswelle 8 herstellbar ist. Zur Ausbildung des Kraftflusses ist die elektromagnetische Kupplung 30 mit einem axial und rotatorisch beweglichen geführten Koppelelement 31 versehen, welches drehfest mit der Antriebswelle 6 verbunden ist und in Abhängigkeit einer Bestromung der elektromagnetischen Kupplung 30 den Kraftfluß zwischen der Antriebswelle 6 und der ersten Abtriebswelle 7 oder der zweiten Abtriebswelle 8 herstellt.

Im Betrieb des Elektromotors 9 und bei einer Ansteuerung der elektromagnetischen Kupplung 30 zur Herstellung eines Kraftflusses zwischen der Antriebswelle 6 und der ersten Abtriebswelle 7 erfolgt eine Betätigung der Geländegangschaltung 2 über den Linearantrieb 11 bei nichtgeschaltetem Geländegang bei einer Linksdrehung des Elektromotors dahingehend, daß der Kugelgewindetrieb 12 in axialer Richtung der ersten Abtriebswelle 7 verschoben wird, wobei eine Kippbewegung des Mitnehmers 13 eine translatorische Bewegung der Schaltmuffe der Synchronisierung 17 zur Folge hat. Bei einer Rechtsdrehung des Elektromotors 9 wird bei bestehendem Kraftfluß zwischen der Antriebswelle 6 und der ersten Abtriebswelle 7 die Schaltmuffe der Synchronisierung 17 über den Linearantrieb 11 wieder in die in Fig. 1 dargestellte Neutralposition zurückverstellt.

Wird hingegen die elektromagnetische Kupplung 30 derart angesteuert, daß ein Kraftfluß zwischen der Antriebswelle 6 und der zweiten Abtriebswelle 8 vorliegt, bewirkt das von der Antriebswelle 6 auf die zweite Abtriebswelle 8 übertragene Antriebsmoment des Elektromotors 9 eine Rotation des Stellrades 23, welche wiederum eine translatorische Bewegung des Stellelementes 29 der zu schließenden Sperre 4 in Richtung der Lamellenpakete 25, 27 zur Folge hat.

Wird der Kraftfluß zwischen der Antriebswelle 6 und zweiten Abtriebswelle 8 aufgehoben oder der Elektromotor 9 stromlos geschaltet, übt eine nicht näher dargestellte Federeinrichtung der Sperre 4 eine Rückstellkraft auf die Lamellenpakete 25, 27 aus, die wiederum eine translatorische Bewegung des Stellelements 29 in Richtung des Stellrades 23 zum Öffnen der Sperre 4 bewirkt.

Dadurch, daß die Lamellensperre 4 immer nur durch eine Bewegungsrichtung bzw. Drehrichtung des Elektromotors 9 von einer geöffneten in eine geschlossene bzw. sperrende Stellung gebracht wird, ist vorteilhafterweise nur ein geringer Regelaufwand erforderlich.

Wenn die Vorderradabtriebswelle 26 und die Hinterradabtriebswelle 28 miteinander versperrt werden sollen, wird die Sperre 4 über die Antriebseinrichtung 5 geschlossen und anschließend durch den Elektromotor 9 solange wie erforderlich in sperrender Stellung gehalten. Wenn die sperrende Wirkung der Sperre 4 wieder aufgehoben werden soll, wird entweder der Kraftfluß zwischen der zweiten Abtriebswelle 8 und der Antriebswelle 6 über die elektromagnetische Kupplung 30 aufgehoben oder der Elektromotor 9 stromlos geschaltet, wobei die Federeinrichtung der Sperre 4 in axialer Richtung der Hinterradabtriebswelle 28 in der oben beschriebenen Art und Weise auf das Stellelement 29 einwirkt. Aufgrund der Ausgestaltung der Nuten 29A des Stellelementes 29 und der Ausnehmungen 23A des Stellrades 23 und den dazwischen angeordneten Wälzkörpern bzw. Kugeln 61 wird das Stellrad 23 in Rotation versetzt und die Sperre 4 geöffnet.

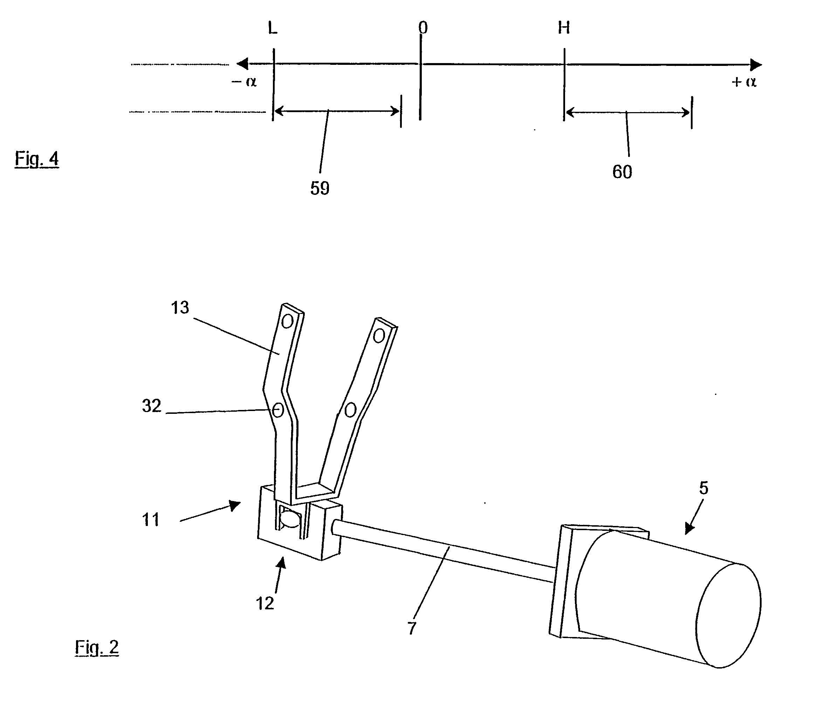

Die Fig. 2 zeigt die Antriebseinrichtung 5 mit dem Linearantrieb 11 in Alleinstellung und soll die Wirkungsweise des Linearantriebes 11 und die Kippbewegung des Mitnehmers 13 aufgrund einer axialen Verstellung des Kugelgewindetriebes 12 verdeutlichen. Der Mitnehmer 13 ist an einem Drehpunkt 32 drehbar in dem Gehäuse 16 gelagert und an seinem der ersten Abtriebswelle 7 zugewandten Ende drehbar mit dem Kugelgewindetrieb 12 verbunden. An seinem dem Kugelgewindetrieb 12 abgewandten Ende ist der Mitnehmer 13 mit der in Fig. 1 dargestellten Synchronisierung 17 verbunden und bewirkt bei einer Drehung um den Drehpunkt 32 eine translatorische Bewegung der Schiebemuffe der Synchronisierung 17. Dabei erfährt das dem Kugelgewindetrieb 12 abgewandte Ende des Mitnehmers 13 eine in axialer Richtung der ersten Abtriebswelle 7 gerichtete Auslenkung, die zur Verstellung der Schiebemuffe der Synchronisierung 17 führt und eine Zu- bzw. Abschaltung des Geländeganges zur Folge hat.

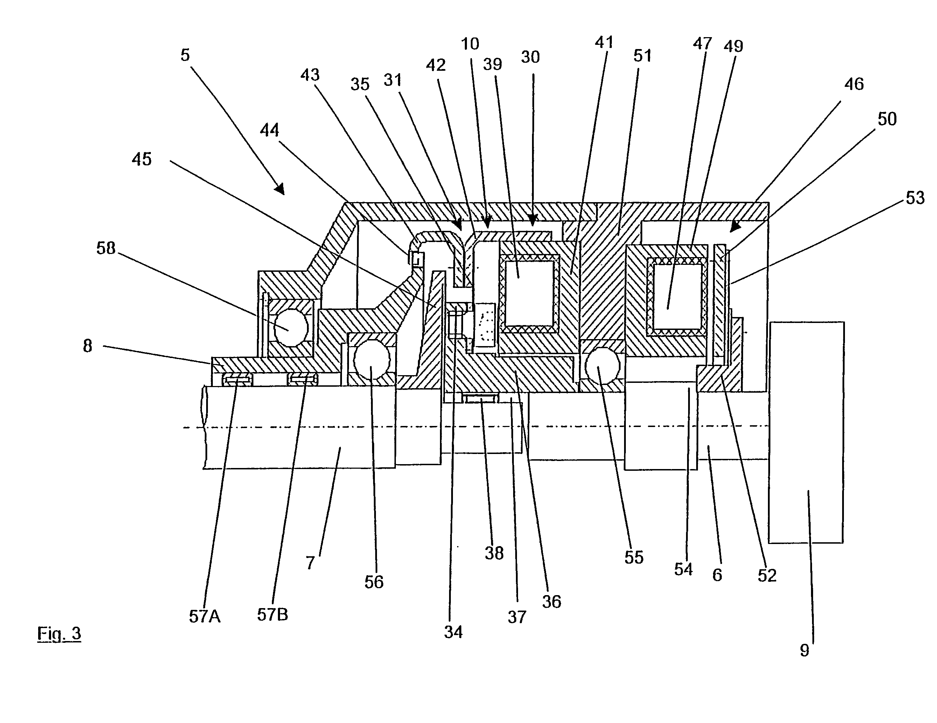

Die Fig. 3 zeigt die Antriebseinrichtung 5 in Alleinstellung, wobei die Antriebswelle 6 im Bereich ihres den Abtriebswellen 7, 8 zugewandten Endes mit einem flanschartigen Bund 34 ausgestaltet ist, an dem ein vorliegend als Blattfeder bzw. Membranfeder ausgebildetes federndes Element 35 des Koppelelementes 31 drehfest befestigt ist.

Im vorliegenden Ausführungsbeispiel ist der flanschartige Bund 34 einstückig mit einem hohlzylindrischen und mit der Antriebswelle 6 fest verbundenen Bauteil 36 ausgebildet, wobei die Verbindung zwischen dem hohlzylindrischen Bauteil 36 und der Antriebswelle 6 im Bereich des den Abtriebswellen 7, 8 abgewandten Endes des hohlzylindrischen Bauteils 36 und dem Bereich des den Abtriebswellen 7, 8 zugewandten Endes der Antriebswelle 6 vorgesehen ist. Das hohlzylindrische Bauteil 36 erstreckt sich in axialer Richtung der Antriebswelle 6 derart, daß die erste Abtriebswelle 7 in eine mittige Bohrung 37 des hohlzylindrischen Bauteils 36 eingreift, wobei zwischen der ersten Abtriebswelle 7 und dem hohlzylindrischen Bauteil 36 ein Wälzlager 38 zur Aufnahme von auf den flanschartigen Bund 34 und das hohlzylindrische Bauteil 36 einwirkenden Radialkräften angeordnet ist.

Die Anordnung bzw. die Ausgestaltung des hohlzylindrischen Bauteils 36 und des Wälzlagers 38 zwischen der ersten Abtriebswelle 7 und dem hohlzylindrischen Bauteil 36 gewährleistet eine exakte Positionierung der Bauteile zueinander sowie eine kompakte Bauweise der Antriebseinrichtung 5.

Betrachtet man den Aufbau der elektromagnetischen Kupplung 30, so weist diese eine eingegossene Spule 39 auf, die in einem ringförmigen Magnetkörper 41 mit einem U-förmigen Querschnitt angeordnet ist.

Das Koppelelement 31 ist zusätzlich zu dem federnden Element 35 mit einem ringförmigen, im Querschnitt L-förmig ausgeführten Führungselement 42 ausgebildet, welches auf dem Magnetkörper 41 der elektromagnetischen Kupplung 30 rotatorisch sowie in axialer Richtung der Antriebswelle 6 beweglich geführt ist, wobei die Führung des Führungselements 42 auf dem Magnetkörper 41 derart ausgebildet ist, daß eine Rotationsbewegung der Antriebswelle 6 auf das hohlzylindrische Bauteil 36, das federnde Element 10 und auch auf das Führungselement 42 übertragen wird und von diesem ausgeführt werden kann.

An dem Führungselement 42 ist ein ringförmiges, im Querschnitt wenigstens annähernd U-förmig ausgebildetes Übertragungselement 43 befestigt, wobei das Führungselement 42 und das Übertragungselement 43 den Anker der elektromagnetischen Kupplung 30 darstellen. In bestromtem Zustand der elektromagnetischen Kupplung 30 wird das Führungselement 42 und das Übertragungselement 43 in axialer Richtung der Antriebswelle 6 in Richtung der beiden Abtriebswellen 7, 8 entlang der Führung des Magnetkörpers 41 entgegen einer Haltekraft verschoben, die durch eine reversible Verformung des federnden Elementes 35 entsteht.

Die zweite Abtriebswelle 8 ist als eine die erste Abtriebswelle 7 umgebende Hohlwelle ausgebildet und an ihrem der Antriebswelle 6 zugewandten Ende mit dem Koppelelement 31 bzw. einer Verzahnung 44 des Übertragungselementes 43 derart in Wirkverbindung bringbar, daß eine drehfeste Verbindung zwischen der Antriebswelle 6 und der zweiten Abtriebswelle 8 in unbestromtem Zustand der elektromagnetischen Kupplung 30 vorliegt. Die Verzahnung 44 des Übertragungselementes 43 ist als eine sich über den gesamten Umfang des Übertragungselementes 43 erstreckende Innenverzahnung ausgebildet und greift in ein Zahnprofil der zweiten Abtriebswelle 8 ein, die an einem der Antriebswelle 6 zugewandten, sich trichterförmig aufweitenden Ende der zweiten Abtriebswelle 8 ausgebildet ist.

Selbstverständlich liegt es im Ermessen des Fachmannes, anstatt der formschlüssigen Verbindung zwischen dem Übertragungselement 43 und der zweiten Abtriebswelle 8 eine kraftschlüssige Verbindung, wie beispielsweise eine reibschlüssige Verbindung über zwei Reibflächen, vorzusehen. Darüber hinaus kann die drehfeste Verbindung anstatt der beschriebenen Verzahnung auch über eine andere geeignete formschlüssige Verbindungsart ausgebildet werden.

Die erste Abtriebswelle 7 ist im Bereich ihres der Antriebswelle 6 zugewandten Endes mit einem Bund 45 versehen, mit welchem im bestromten Zustand der elektromagnetischen Kupplung 30 das Koppelelement 31 bzw. das Übertragungselement 43 derart kontaktiert, daß zwischen der Antriebswelle 6 und der ersten Abtriebswelle 7 eine drehfeste Verbindung vorliegt und das über die Antriebswelle 6 eingeleitete Antriebsmoment über das Koppelelement 31 auf die erste Abtriebswelle 7 übertragen wird.

Der Bund 45 der ersten Abtriebswelle 7 ist gemäß der Ausführung nach Fig. 3 als ein separates flanschartiges Bauteil ausgebildet, welches über einen Preßsitz mit der ersten Abtriebswelle 7 verbunden ist. Es ist dem Fachmann jedoch unbenommen, den Bund 45 gegebenenfalls einstückig mit der Abtriebswelle 7 auszubilden sowie eine andere kraft- oder formschlüssige - auf jeden Fall drehfeste - Verbindung zwischen der ersten Abtriebswelle 7 und dem Bund 45 vorzusehen.

In bestromtem Zustand der elektromagnetischen Kupplung 30 wird das Koppelelement 31 bzw. das Führungselement 42 und das Übertragungselement 43 von dem durch die eingegossene Spule 39 der elektromagnetischen Kupplung 30 erzeugten elektrischen Feld in axialer Richtung auf den Bund 45 gedrückt, wobei die Verzahnung 44 des Übertragungselementes 43 aus dem Eingriff mit dem Zahnprofil der zweiten Abtriebswelle 8 gebracht wird. Damit ist im bestromten Zustand der elektromagnetischen Kupplung 30 die Verbindung zwischen der Antriebswelle 6 und der zweiten Abtriebswelle 8 gelöst und ein Reibschluß zwischen dem Übertragungselement 43 und dem Bund 45 hergestellt, so daß ein Kraftfluß zwischen der Antriebswelle 6 und der ersten Abtriebswelle 7 über das Koppelelement 31 vorliegt.

In unbestromtem Zustand der elektromagnetischen Kupplung 30 wird das Übertragungselement 43 und das Führungselement 42 durch die dem federnden Element 35 im bestromten Zustand der elektromagnetischen Kupplung 30 zugeführte potentielle Energie in axialer Richtung der Antriebswelle 6 von dem Bund 45 zu der Spule 39 der elektromagnetischen Kupplung 30 hin verschoben. Dabei wird die reibschlüssige Verbindung zwischen dem Übertragungselement 43 und dem Bund 45 gelöst, und die Verzahnung 44 des Übertragungselementes 43 steht wieder in Eingriff mit dem Zahnprofil der zweiten Abtriebswelle 8.

Im Bereich der Antriebswelle 6 ist zur Entlastung der Antriebseinrichtung 5 eine elektromagnetische Bremse 46 vorgesehen, mit welcher die Antriebswelle 6 in Abhängigkeit einer Bestromung der elektromagnetischen Bremse 46 in einer Position drehfest gehalten wird. Die elektromagnetische Bremse 46 weist eine eingegossene Spule 47 auf, wobei die Spule 47 in einem ringförmigen Magnetkörper 49 angeordnet ist, der mit einem U-förmigen Querschnitt ausgebildet ist.

Darüber hinaus umfaßt die elektromagnetische Bremse 46 ein mit der Antriebswelle 6 drehfest und in axialer Richtung der Antriebswelle 6 bewegliches Bremselement 50, welches im bestromten Zustand der elektromagnetischen Bremse 46 einen Kraftfluß zwischen der Antriebswelle 6 und der elektromagnetischen Bremse 46 ausbildet. Im unbestromten Zustand der elektromagnetischen Bremse 46 ist das Bremselement 50 in axialer Richtung der Antriebswelle 6 beabstandet zu der Spule 47 und dem Magnetkörper 49 der elektromagnetischen Bremse 46 angeordnet. Aufgrund des Kontaktes zwischen dem Bremselement 50 und dem Magnetkörper 47 der elektromagnetischen Bremse 46 und einer Befestigung des Magnetkörpers 49 in einem Gehäuse 51 der Antriebseinrichtung 5 wird die Antriebswelle 6 über die elektromagnetische Bremse 46 in einer gewünschten stehenden Position mit anliegendem Moment gehalten, ohne daß von der Antriebseinrichtung 5 ein Antriebsmoment bzw. ein Gegenmoment aufgebracht werden muß.

Das anliegende Moment wirkt in Abhängigkeit der Position der elektromagnetischen Kupplung 30 von der ersten Abtriebswelle 7 oder der zweiten Abtriebswelle 8 bzw. der Lamellensperre 4 oder der Übersetzungsstufe 2 auf die Antriebswelle 6 ein. Für den Fall, daß von der Antriebseinrichtung 5 ein dem an den beiden Abtriebswellen 7, 8 oder an einer Abtriebswelle 7 oder 8 anliegenden Moment entgegenwirkendes Gegenmoment aufgebracht werden soll, könnte der Elektromotor 9 der Antriebseinrichtung 5 permanent bestromt werden. Dies ist jedoch unerwünscht, da die zur Aufrechterhaltung des Gegenmomentes notwendige permanente Bestromung des Elektromotors 9 einen hohen Energieeinsatz erfordert und eine unerwünschte Erwärmung der Antriebseinheit 5 zur Folge hätte. Dies wird durch den Einsatz der elektromagnetischen Bremse 46 erfolgreich vermieden.

Um die reibschlüssige Verbindung zwischen dem Bremselement 50 und dem Magnetkörper 49 der elektromagnetischen Bremse 46 beim Übergang vom bestromten Zustand in den unbestromten Zustand der elektromagnetischen Bremse 46 sicher zu lösen, ist zwischen einem Wellenflansch 52 der Antriebswelle 6 und dem Bremselement 50 ein weiteres federndes Element 53 vorgesehen, welches aufgrund der axialen Verschiebung des Bremselementes 50 im bestromten Zustand der elektromagnetischen Kupplung 46 eine reversible Verformung erfährt und potentielle Federenergie speichert. Die gespeicherte Energie führt beim Übergang in einen unbestromten Zustand der elektromagnetischen Bremse 46 zu einer axialen Verschiebung des Bremselementes 50 von dem Magnetkörper 49 der elektromagnetischen Bremse 46 weg in eine Ruheposition des Bremselementes 50. Der Wellenflansch 52 ist fest mit der Antriebswelle 6 über einen Preßsitz verbunden und über einen Absatz 54 der Antriebswelle 6 in axialer Richtung der Antriebswelle 6 gehalten.

Die elektromagnetische Kupplung 30 ist ebenso wie die elektromagnetische Bremse 46 über ihre Halterung 41 in dem Gehäuse 51 der Antriebseinrichtung 5 fest und unbeweglich angeordnet. Hinsichtlich ihres Aufbaus sind die elektromagnetische Kupplung 30 und die elektromagnetische Bremse 46 grundsätzlich von gleicher Art, wobei die erzeugten elektromagnetischen Felder unterschiedliche Auswirkungen auf die sie umgebenden Bauteile haben. So bewirkt das Feld der elektromagnetischen Kupplung 30 eine Abstoßung des Koppelelementes 31, wohingegen das Feld der elektromagnetischen Bremse 46 eine Anziehung des Bremselementes 50, das den Anker der elektromagnetischen Bremse 46 darstellt, bewirkt. Die Magnetkörper 41, 49 sind aus Eisen hergestellt, um das elektromagnetische Feld optimal bilden zu können.

Die Antriebswelle 6 ist in dem Gehäuse 51 über ein Kugellager 55 gelagert, welches auf die Antriebswelle 6 einwirkende Axialkräfte aufnimmt. Die zweite Abtriebswelle 8 ist ebenfalls über ein Kugellager 58 in dem Gehäuse 51 drehbar gelagert, wobei die erste Abtriebswelle 7 über das Wälzlager 38 in dem hohlzylindrischen Bauteil 36 und über zwei weitere Wälzlager 57A, 57B sowie ein zusätzliches Kugellager 56 in der zweiten Abtriebswelle 8 drehbar gelagert ist.

Die Antriebseinheit 5 weist im vorliegenden Ausführungsbeispiel das separate an dem Gehäuse 16 des Allradverteilergetriebes 1 befestigte Gehäuse 51 auf. Die außerhalb des Getriebegehäuses 16 liegende Anordnung der Antriebseinheit 5 ermöglicht einen einfachen Aufbau letzterer, da z.B. keine Kabeldichtungen im Gehäuse vorgesehen werden müssen, sowie eine einfache Montage.

Es bleibt aber dem Fachmannes überlassen, die Antriebseinrichtung 5 in Abhängigkeit des jeweiligen Anwendungsfalles in einer weiteren Ausführungsform des Allradverteilergetriebes ohne eigenes Gehäuse in das Gehäuse des Allradverteilergetriebes zu integrieren.

Die Fig. 4 zeigt eine äußerst schematisierte Darstellung des Regelbereiches der Antriebseinrichtung 5 bzw. des Elektromotors 9, wobei eine waagrechte Linie mit Pfeilspitzen ausgehend von einem Nullpunkt "0" die beiden Drehrichtungen des Elektromotors 9 wiedergibt. An dem mit "0" wiedergegebenen Betriebspunkt befindet sich der Elektromotor 9 in Stillstand. Von diesem Punkt ausgehend erfolgt eine Drehung über den Winkel α in Richtung eines Betriebspunktes H ("high") oder eine entgegengesetzte Drehung über den Winkel -α in Richtung eines Punktes L ("Low"). Die Punkte L und H symbolisieren Kupplungspunkte, bei denen vorliegend eine Umschaltung der elektromagnetischen Kupplung 30 erfolgt.

Der Bereich zwischen dem einen Stillstand kennzeichnenden Betriebspunkt "0" und den Kupplungspunkten L bzw. H stellt den Regelbereich der ersten Abtriebswelle 7 dar. An den Kupplungspunkten L, H wird zu einer Regelung der zweiten Abtriebswelle 8 umgeschaltet, deren Regelbereich sich jeweils direkt an die Kupplungspunkte mit den in der Fig. 4 ersichtlichen Regelbereichen 59, 60 anschließt.

In diesen Regelbereichen 59, 60 wird die Versperrung der Lamellensperre 4 geregelt, wobei in Richtung "+α" eine aktive Regelung der Lamellensperre 4 erfolgt und in Richtung "-α" das Verstellsystem aus Stellrad 23, Wälzkörpern 61 und dem Stellelement 29 wirkt. Dabei ist besonders von Vorteil, daß die Regelung der zweiten Abtriebswelle 8 ohne Leerlaufbereich unmittelbar nach Erreichen der Kupplungspunkte L bzw. H beginnt.

In einer weiteren Ausführung kann es auch vorgesehen sein, daß im Bereich des Kugelgewindetriebs 12 ein Wegsensor angeordnet ist, der signalisiert, wann die Kupplungspunkte L bzw. H erreicht sind, so daß eine zugeordnete elektronische Steuereinheit erkennen kann, daß sofort mit der Betätigung der zweiten Abtriebswelle 8 begonnen werden kann.

Durch die Entkoppelung des Antriebs der Lamellensperre vom Antrieb der Geländegangbetätigung liegt bei der gezeigten Ausführung des Allradverteilergetriebes in vorteilhafter Weise ein Ein-Quadranten-Regelbereich vor, welcher regelungstechnisch einfach zu handhaben ist.

### Bezugszeichen

- 1: Allradverteilergetriebe
- 2: Übersetzungsstufe
- 3: Zweiter Planetensatz
- 4: Sperre bzw. Lamellensperre
- 5: Antriebseinrichtung
- 6: Antriebswelle
- 7: erste Abtriebswelle
- 8: zweite Abtriebswelle
- 9: Elektromotor
- 10: Umschalteinrichtung
- 11: Linearantrieb
- 12: Kugelgewindetrieb
- 13: Mitnehmer
- 14: Kugel
- 15: Kugelmutter
- 16: Gehäuse des Allradverteilergetriebes
- 17: Synchronisierung
- 18: Übersetzungseinrichtung
- 19: Welle
- 20, 21: Zahnrad
- 22: Stirnrad der zweiten Abtriebswelle
- 23: Stellrad
- 23A: Ausnehmung
- 24: Zahnprofil
- 25: Innenlamellen
- 26: Vorderradabtriebswelle
- 27: Außenlamellen
- 28: Hinterradabtriebswelle
- 29: Stellelement

- 29A: Nut
- 30: elektromagnetische Kupplung
- 31: Koppelelement
- 32: Drehpunkt
- 34: flanschartiger Bund
- 35: federndes Element
- 36: hohlzylindrisches Bauteil
- 37: mittige Bohrung
- 38: Wälzlager
- 39: eingegossene Spule der elektromagnetischen Kupplung
- 41: Magnetkörper der elektromagnetischen Kupplung
- 42: Führungselement
- 43: Übertragungselement
- 44: Verzahnung des Übertragungselementes
- 45: Bund
- 46: elektromagnetische Bremse
- 47: eingegossene Spule der elektromagnetischen Bremse
- 49: Magnetkörper der elektrischen Bremse
- 50: Bremselement
- 51: Gehäuse
- 52: Wellenflansch der Antriebswelle
- 53: federndes Element
- 54: Absatz der Antriebswelle
- 55, 56: Kugellager
- 57A, 57B: Wälzlager
- 58: Kugellager
- 59, 60: Regelbereich
- 61: Wälzkörper, Kugel

## Patentansprüche

1. Allradverteilergetriebe (1) für ein Kraftfahrzeug mit einem Planetensatz als Übersetzungsstufe (2) für einen zuschaltbaren Geländegang, mit einem Planetensatz (3) mit variabler Teilung für eine Verteilung eines Antriebsmoments auf eine Vorderachse und eine Hinterachse, und mit einer regelbaren Sperre (4) zur Sperrung zwischen der Vorderachse und der Hinterachse, wobei die Sperre und die Übersetzungsstufe über eine ansteuerbare Antriebseinrichtung (5) betätigbar sind, **dadurch gekennzeichnet, daß** die Antriebseinrichtung (5) eine Antriebswelle (6) und zwei Abtriebswellen (7, 8) aufweist, wobei die erste Abtriebswelle (7) mit der Übersetzungsstufe (2) und die zweite Abtriebswelle (8) mit der Sperre (4) in Wirkverbindung steht und ein über die Antriebswelle (6) zugeführtes Moment in Abhängigkeit einer Ansteuerung einer Umschalteinrichtung (10) zum Betätigen der Sperre (4) oder der Übersetzungsstufe (2) auf die erste oder die zweite Abtriebswelle (7 oder 8) aufbringbar ist.

2. Allradverteilergetriebe nach Anspruch 1, **dadurch gekennzeichnet, daß** die Umschalteinrichtung (10) eine elektromagnetische Kupplung (30) aufweist, mit welcher ein Kraftfluß zwischen der Antriebswelle (6) und der ersten oder der zweiten Abtriebswelle (7 oder 8) herstellbar ist.

3. Allradverteilergetriebe nach Anspruch 1 oder 2, **dadurch gekennzeichnet, daß** die Sperre (4) und die Übersetzungsstufe (2) von der Antriebseinrichtung (5) sequentiell translatorisch antreibbar und in einer Stellung haltbar sind.

4. Allradverteilergetriebe nach einem der Ansprüche 1 bis 3, **dadurch gekennzeichnet, daß** die erste Abtriebswelle (7) im Bereich ihres der Antriebswelle (6) abgewandten Endes mit einem Linearantrieb (11) in Wirkverbindung steht.

5. Allradverteilergetriebe nach Anspruch 4, **dadurch gekennzeichnet, daß** der Linearantrieb (11) einen Kugelgewindetrieb (12) und einen kippbaren Mitnehmer (13) aufweist, wobei der Kugelgewindetrieb (12) eine mit der ersten Abtriebswelle (7) in Wirkverbindung stehende, mehrere Kugeln (14) aufweisende Kugelmutter (15) umfaßt, die bei einer Rotation der ersten Abtriebswelle (7) in axialer Richtung der ersten Abtriebswelle (7) verstellt wird und eine Kippbewegung des Mitnehmers (13) bewirkt.

6. Allradverteilergetriebe nach Anspruch 5, **dadurch gekennzeichnet, daß** der Mitnehmer (13) derart in einem Gehäuse (16) des Allradverteilergetriebes (1) kippbar gelagert und mit einer Synchronisierung (17) verbunden ist, daß eine Kippbewegung des Mitnehmers (13) eine Betätigung der Übersetzungsstufe (2) bewirkt.

7. Allradverteilergetriebe nach einem der Ansprüche 1 bis 6, **dadurch gekennzeichnet, daß** die zweite Abtriebswelle (8) an ihrem der Antriebswelle (6) abgewandten Ende über eine Übersetzungseinrichtung (18) mit der Sperre (4) in Wirkverbindung steht.

8. Allradverteilergetriebe nach einem der Ansprüche 1 bis 7, **dadurch gekennzeichnet, daß** die Sperre (4) mehrere axial verschiebliche Lamellen (25, 27) aufweist, wobei Innenlamellen (25) der Sperre (4) drehfest mit einer Hinterradabtriebswelle (28) des Allradverteilergetriebes (1) und Außenlamellen (27) der Sperre (4) drehfest mit einer Vorderradabtriebswelle (26) des Allradverteilergetriebes (1) verbunden sind.

9. Allradverteilergetriebe nach Anspruch 8, **dadurch gekennzeichnet, daß** zur Einstellung der Sperre (4) ein Stellrad (23) und zwischen den Lamellenpaketen (25, 27) und dem Stellrad (23) ein in dem Gehäuse (16) des Allradverteilergetriebes (1) axial verschiebliches und drehfest angeordnetes Stellelement (29) vorgesehen sind, wobei das Stellelement (29) auf seiner dem Stellrad (23) zugewandten Seite wenigstens eine Nut (29A) zur Aufname von Wälzkörpern (61) aufweist, welche mit wenigstens einer Ausnehmung (23A) auf der dem Stellelement (29) zugewandten Seite des Stellrades (23) derart korrespondiert, daß eine Rotation des Stellrades (23) ein Abwälzen der Wälzköper (61) und eine axiale Bewegung des Stellelementes (29) bewirkt.

10. Allradverteilergetriebe nach einem der Ansprüche 7 bis 9, **dadurch gekennzeichnet, daß** die Übersetzungseinrichtung (18) zwei mit einer Welle (19) fest verbundene und in dem Gehäuse (16) drehbar angeordnete Zahnräder (20, 21) aufweist, wobei das erste Zahnrad (20) mit einem mit der zweiten Abtriebswelle (8) fest verbundenen Stirnrad (22) in Eingriff steht.

11. Allradverteilergetriebe nach einem der Ansprüche 9 oder 10, **dadurch gekennzeichnet, daß** die Sperre (4) zur Herstellung der Wirkverbindung mit der zweiten Abtriebswelle (8) mit einem sich wenigstens teilweise über den Umfang des Stellrades (23) erstreckenden Zahnprofil (24) versehen ist.

12. Allradverteilergetriebe nach Anspruch 10 oder 11, **dadurch gekennzeichnet, daß** das zweite Zahnrad (21) der Welle (19) mit dem Zahnprofil (24) des Stellrades (24) in Eingriff steht.

13. Allradverteilergetriebe nach einem der Ansprüche 2 bis 12, **dadurch gekennzeichnet, daß** die elektromagnetische Kupplung (30) ein axial und rotatorisch beweglich geführtes Koppelelement (31) aufweist, welches drehfest mit der Antriebswelle (6) verbunden ist und in Abhängigkeit einer Bestromung der elektromagnetischen Kupplung (30) den Kraftfluß zwischen der Antriebswelle (6) und der ersten oder der zweiten Abtriebswelle (7 oder 8) herstellt.

14. Allradverteilergetriebe nach Anspruch 13, **dadurch gekennzeichnet, daß** die Antriebswelle (6) im Bereich ihres den Abtriebswellen (7, 8) zugewandten Endes einen flanschartigen Bund (34) aufweist, an dem ein federndes Element (35) des Koppelelementes (31) drehfest befestigt ist.

15. Allradverteilergetriebe nach Anspruch 13 oder 14, **dadurch gekennzeichnet, daß** die zweite Abtriebswelle (8) als eine die erste Abtriebswelle (7) umgebende Hohlwelle ausgebildet ist und an ihrem der Antriebswelle (6) zugewandten Ende mit dem Koppelelement (31) derart in Wirkverbindung bringbar ist, daß eine drehfeste Verbindung zwischen der Antriebswelle (6) und der zweiten Abtriebswelle (8) in unbestromten Zustand der elektromagnetischen Kupplung (30) vorliegt, wobei dann die Verbindung zwischen der Antriebswelle (6) und der ersten Abtriebswelle (7) gelöst ist.

16. Allradverteilergetriebe nach einem der Ansprüche 13 bis 15, **dadurch gekennzeichnet, daß** die erste Abtriebswelle (7) im Bereich ihres der Antriebswelle (6) zugewandten Endes einen Bund (45) aufweist, mit welchem im bestromten Zustand der elektromagnetischen Kupplung (30) das Koppelelement (31) derart kontaktiert, daß zwischen der Antriebswelle (6) und der ersten Abtriebswelle (7) eine drehfeste Verbindung vorliegt, wobei dann die Verbindung zwischen der Antriebswelle (6) und der zweiten Abtriebswelle (8) gelöst ist.

17. Allradverteilergetriebe nach einem der Ansprüche 15 oder 16, **dadurch gekennzeichnet, daß** zur Ausbildung der drehfesten Verbindung zwischen der Antriebswelle (6) und der ersten oder der zweiten Abtriebswelle (7 oder 8) jeweils eine formschlüssige oder kraftschlüssige Verbindung vorgesehen ist.

18. Allradverteilergetriebe nach einem der Ansprüche 1 bis 17, **dadurch gekennzeichnet, daß** zur Entlastung der Antriebseinrichtung (5) im Bereich der Antriebswelle (6) eine elektromagnetische Bremse (46) vorgesehen ist, mit welcher die Antriebswelle (6) in Abhängigkeit einer Bestromung der elektromagnetischen Bremse (46) in einer Position drehfest gehalten wird.

19. Allradverteilergetriebe nach Anspruch 18, **dadurch gekennzeichnet, daß** die elektromagnetische Bremse (46) ein mit der Antriebswelle (6) drehfest und in axialer Richtung der Antriebswelle (6) bewegliches Bremselement (50) aufweist, welches im bestromten Zustand der elektromagnetischen Bremse (46) einen Kraftfluß zwischen der Antriebswelle (6) und der elektromagnetischen Bremse (46) ausbildet.

## Claims

1. All-wheel transfer gearbox (1) for a motor vehicle having a planet set as a transmission step (2) for an engageable off-road gear, having a planet set (3) of variable pitch for distributing a driving torque to a front axle and a rear axle, and having a controllable interlock (4) for interlocking between the front axle and the rear axle, wherein the interlock and the transmission step are actuable by means of a controllable drive device (5), **characterized in that** the drive device (5) comprises an input shaft (6) and two output shafts (7, 8), wherein the first output shaft (7) is workingly connected to the transmission step (2) and the second output shaft (8) is workingly connected to the interlock (4) and a torque supplied via the input shaft (6) is appliable in dependence upon an activation of a changeover device (10) to actuate the interlock (4) or the transmission stage (2) to the first or the second output shaft (7 or 8).

2. All-wheel transfer gearbox according to claim 1, **characterized in that** the changeover device (10) comprises an electromagnetic clutch (30), by means of which a power flow is producible between the input shaft (6) and the first or the second output shaft (7 or 8) .

3. All-wheel transfer gearbox according to claim 1 or 2, **characterized in that** the interlock (4) and the transmission step (2) are sequentially drivable in a translatory manner and holdable in one position by the drive device (5).

4. All-wheel transfer gearbox according to one of claims 1 to 3, **characterized in that** the first output shaft (7) in the region of its end remote from the input shaft (6) is workingly connected to a linear drive (11).

5. All-wheel transfer gearbox according to claim 4, **characterized in that** the linear drive (11) comprises a ball screw (12) and a tiltable driver (13), wherein the ball screw (12) comprises a ball nut (15), which comprises a plurality of balls (14) and is workingly connected to the first output shaft (7) and which upon a rotation of the first output shaft (7) is displaced in axial direction of the first output shaft (7) and leads to a tilting movement of the driver (13).

6. All-wheel transfer gearbox according to claim 5, **characterized in that** the driver (13) is tiltably supported in a housing (16) of the all-wheel transfer gearbox (1) and connected to a synchronizer unit (17) in such a way that a tilting movement of the driver (13) leads to an actuation of the transmission step (2).

7. All-wheel transfer gearbox according to one of claims 1 to 6, **characterized in that** the second output shaft (8) at its end remote from the input shaft (6) is workingly connected by a transmission device (18) to the interlock (4).

8. All-wheel transfer gearbox according to one of claims 1 to 7, **characterized in that** the interlock (4) comprises a plurality of axially displaceable discs (25, 27) wherein inner discs (25) of the interlock (4) are non-rotatably connected to a rear wheel output shaft (28) of the all-wheel transfer gearbox (1) and outer discs (27) of the interlock (4) are non-rotatably connected to a front wheel output shaft (26) of the all-wheel transfer gearbox (1).

9. All-wheel transfer gearbox according to claim 8, **characterized in that** for adjustment of the interlock (4) there are provided a control wheel (23) and between the disc packs (25, 27) and the control wheel (23) a non-rotatably disposed control element (29) that is axially displaceable in the housing (16) of the all-wheel transfer gearbox (1), wherein the control element (29) on its side facing the control wheel (23) has at least one groove (29A) for receiving rolling bodies (61) that corresponds with at least one recess (23A) on the side of the control wheel (23) facing the control element (29), such that a rotation of the control wheel (23) leads to a rolling of the rolling bodies (61) and to an axial movement of the control element (29).

10. All-wheel transfer gearbox according to one of claims 7 to 9, **characterized in that** the transmission device (18) comprises two gear wheels (20, 21), which are firmly connected to a shaft (19) and disposed rotatably in the housing (16), wherein the first gear wheel (20) is in mesh with a spur gear (22), which is firmly connected to the second output shaft (8).

11. All-wheel transfer gearbox according to one of claims 9 or 10, **characterized in that** the interlock (4) for establishing the working connection to the second output shaft (8) is provided with a tooth profile (24), which extends a least partially over the circumference of the control wheel (23).

12. All-wheel transfer gearbox according to claim 10 or 11, **characterized in that** the second gear wheel (21) of the shaft (19) is in mesh with the tooth profile (24) of the control wheel (24).

13. All-wheel transfer gearbox according to one of claims 2 to 12, **characterized in that** the electromagnetic clutch (30) comprises an axially and rotationally movably guided coupling element (31), which is non-rotatably connected to the input shaft (6) and in dependence upon an energizing of the electromagnetic clutch (30) produces the power flow between the input shaft (6) and the first or the second output shaft (7 or 8).

14. All-wheel transfer gearbox according to claim 13, **characterized in that** the input shaft (6) in the region of its end facing the output shafts (7, 8) has a flange-like collar (34), to which a resilient element (35) of the coupling element (31) is non-rotatably fastened.

15. All-wheel transfer gearbox according to claim 13 or 14, **characterized in that** the second output shaft (8) takes the form of a hollow shaft surrounding the first output shaft (7) and at its end facing the input shaft (6) is bringable into working connection with the coupling element (31) in such a way that a non-rotatable connection exists between the input shaft (6) and the second output shaft (8) in the non-energized state of the electromagnetic clutch (30), wherein the connection between the input shaft (6 and the first output shaft (7) is then interrupted.

16. All-wheel transfer gearbox according to one of claims 13 to 15, **characterized in that** the first output shaft (7) in the region of its end facing the input shaft (6) has a collar (45), with which in the energized state of the electromagnetic clutch (30) the coupling element (31) comes into contact in such a way that a non-rotatable connection exists between the input shaft (6) and the first output shaft (7), wherein the connection between the input shaft (6) and the second output shaft (8) is then interrupted.

17. All-wheel transfer gearbox according to one of claims 15 or 16, **characterized in that** for forming the non-rotatable connection between the input shaft (6) and the first or second output shaft (7 or 8) in each case a positive or non-positive connection is provided.

18. All-wheel transfer gearbox according to one of claims 1 to 17, **characterized in that** for relieving the load of the drive device (5) in the region of the input shaft (6) an electromagnetic brake (46) is provided, by means of which the input shaft (6) in dependence upon an energizing of the electromagnetic brake (46) is held non-rotatably in one position.

19. All-wheel transfer gearbox according to claim 18, **characterized in that** the electromagnetic brake (46) comprises a braking element (50), which is movable non-rotatably with the input shaft (6) and in axial direction of the input shaft (6) and which in the energized state of the electromagnetic brake (46) develops a power flow between the input shaft (6) and the electromagnetic brake (46).

## Revendications

1. Boîte de vitesses intermédiaire à traction intégrale (1) pour un véhicule automobile avec un train d'engrenage épicycloïdal comme étage de démultiplication (2) pour l'enclenchement d'un rapport tout-terrain, avec un train d'engrenage épicycloïdal (3) avec une division variable pour une répartition d'un couple d'entraînement sur un essieu avant et un essieu arrière, et avec un dispositif de verrouillage réglable (4) pour un verrouillage entre l'essieu avant et l'essieu arrière, dans laquelle le dispositif de verrouillage et l'étage de démultiplication peuvent être actionnés par l'intermédiaire d'un dispositif d'entraînement contrôlable (5), **caractérisée en ce que** le dispositif d'entraînement (5) comprend un arbre d'entrée (6) et deux arbres de sortie (7, 8), le premier arbre de sortie (7) étant relié de manière fonctionnelle avec l'étage de démultiplication (2) et le second arbre de sortie (8) étant relié de manière fonctionnelle avec le dispositif de verrouillage (4) et un couple généré par l'intermédiaire de l'arbre d'entrée (6) pouvant être exercé en fonction d'une commande d'un dispositif de commutation (10) pour l'actionnement du dispositif de verrouillage (4) ou de l'étage de démultiplication (2) sur le premier ou le second arbre de sortie (7 ou 8).

2. Boîte de vitesses intermédiaire à traction intégrale selon la revendication 1, **caractérisée en ce que** le dispositif de commutation (10) comprend un embrayage électromagnétique (30) grâce auquel un flux de force peut être établi entre l'arbre d'entrée (6) et le premier ou le second arbre de sortie (7 ou 8).

3. Boîte de vitesses intermédiaire à traction intégrale selon la revendication 1 ou 2, **caractérisée en ce que** le dispositif de verrouillage (4) et l'étage de démultiplication (2) peuvent être entraînés séquentiellement en translation et maintenus dans une position à l'aide du dispositif d'entraînement (5).

4. Boîte de vitesses intermédiaire à traction intégrale selon l'une des revendications 1 à 3, **caractérisée en ce que** le premier arbre de sortie (7) est en liaison fonctionnelle, au niveau de son extrémité opposée à l'arbre d'entrée (6), avec un entraînement linéaire (11).

5. Boîte de vitesses intermédiaire à traction intégrale selon la revendication 4, **caractérisée en ce que** l'entraînement linéaire (11) comprend un mécanisme à filetage à billes (12) et un entraîneur (13) basculant, le mécanisme à filetage à billes (12) comprenant un écrou à billes (15) comprenant plusieurs billes (14), en liaison fonctionnelle avec le premier arbre de sortie (7), qui est déplacé lors d'une rotation du premier arbre de sortie (7) dans la direction axiale et qui provoque un basculement de l'entraîneur (13).

6. Boîte de vitesses intermédiaire à traction intégrale selon la revendication 5, **caractérisée en ce que** l'entraîneur (13) est logé dans un carter (16) de la boîte de vitesses intermédiaire à traction intégrale (1) de manière basculante et relié avec une synchronisation (17) de façon à ce qu'un basculement de l'entraîneur (13) provoque l'actionnement de l'étage de démultiplication (2).

7. Boîte de vitesses intermédiaire à traction intégrale selon l'une des revendications 1 à 6, **caractérisée en ce que** le second arbre de sortie (8) est en liaison fonctionnelle avec le dispositif de verrouillage (4) par l'intermédiaire d'un dispositif de démultiplication (18), au niveau de son extrémité opposée à l'arbre d'entrée (6).

8. Boîte de vitesses intermédiaire à traction intégrale selon l'une des revendications 1 à 7, **caractérisée en ce que** le dispositif de verrouillage (4) comprend plusieurs lamelles à coulissement axial (25, 27), des lamelles internes (25) du dispositif de verrouillage (4) étant reliées de manière solidaire en rotation avec un arbre de sortie de roue arrière (28) de la boîte de vitesses intermédiaire à traction intégrale (1) et des lamelles externes (27) du dispositif de verrouillage (4) étant reliées de manière solidaire en rotation avec un arbre de sortie de roue avant (26) de la boîte de vitesses intermédiaire à traction intégrale (1).

9. Boîte de vitesses intermédiaire à traction intégrale selon la revendication 8, **caractérisée en ce qu'**une roue de réglage (23) est prévue pour le réglage du dispositif de verrouillage (4) et, entre les ensembles de lamelles (25, 27) et la roue de réglage (23) est prévu un élément de réglage (29) disposé de manière mobile axialement et solidaire en rotation dans le carter (16) de la boîte de vitesses intermédiaire à traction intégrale (1), l'élément de réglage (29) comprenant, sur son côté orienté vers la roue de réglage (23), au moins une rainure (29A) pour loger des éléments de roulement (61), qui correspond à au moins un évidement (23A) sur le côté de la roue de réglage (23) orienté vers l'élément de réglage (29), de façon à ce qu'une rotation de la roue de réglage (23) provoque un roulement des éléments de roulement (61) et un mouvement axial de l'élément de réglage (29).

10. Boîte de vitesses intermédiaire à traction intégrale selon l'une des revendications 7 à 9, **caractérisée en ce que** le dispositif de démultiplication (18) comprend deux roues dentées (20, 21) fixées à un arbre (19) et disposées de manière rotative dans le carter (16), la première roue dentée (20) étant en engrènement avec un pignon droit (22) fixé sur le deuxième arbre de sortie (8).

11. Boîte de vitesses intermédiaire à traction intégrale selon l'une des revendications 9 ou 10, **caractérisée en ce que** le dispositif de verrouillage (4) comporte un profil denté (24) qui s'étend au moins partiellement sur la circonférence de la roue de réglage (23), pour établir une liaison fonctionnelle avec le second arbre de sortie (8).

12. Boîte de vitesses intermédiaire à traction intégrale selon la revendication 10 ou 11, **caractérisée en ce que** la seconde roue dentée (21) de l'arbre (19) est en engrènement avec le profil denté (24) de la roue de réglage (23).

13. Boîte de vitesses intermédiaire à traction, intégrale selon l'une des revendications 2 à 12, **caractérisée en ce que** l'embrayage électromagnétique (30) comprend un élément de couplage (31) guidé de manière mobile axialement et en rotation, qui est relié de manière solidaire en rotation avec l'arbre d'entrée (6) et qui établit, en fonction d'une alimentation en courant de l'embrayage électromagnétique (30), un flux de force entre l'arbre d'entrée (6) et le premier et le second arbre de sortie (7 ou 8).

14. Boîte de vitesses intermédiaire à traction intégrale selon la revendication 13, **caractérisée en ce que** l'arbre d'entrée (6) comprend, au niveau de son extrémité orientée vers les arbres de sortie (7, 8), un collet (34) en forme de bride, sur lequel est fixé, de manière solidaire en rotation, un élément élastique (35) de l'élément de couplage (31).

15. Boîte de vitesses intermédiaire à traction intégrale selon la revendication 13 ou 14, **caractérisée en ce que** le second arbre de sortie (8) est conçu comme un arbre creux entourant le premier arbre de sortie (7) et **en ce qu'**il peut, à son extrémité orientée vers l'arbre d'entrée (6), être mis en liaison de fonctionnement avec l'élément de couplage (31) de façon à ce qu'une liaison solidaire en rotation existe entre l'arbre d'entrée (6) et le second arbre de sortie (8) lorsque l'embrayage électromagnétique (30) n'est pas alimenté, la liaison entre l'arbre d'entrée (6) et le premier arbre de sortie (7) étant alors supprimée.

16. Boîte de vitesses intermédiaire à traction intégrale selon l'une des revendications 13 à 15, **caractérisée en ce que** le premier arbre de sortie (7) comprend, au niveau de son extrémité orientée vers l'arbre d'entrée (6), un collet (45) avec lequel, lorsque l'embrayage électromagnétique (30) est alimenté, l'élément de couplage (31) entre en contact, de façon à ce qu'il existe, entre l'arbre d'entrée (6) et le premier arbre de sortie (7), une liaison solidaire en rotation, la liaison entre l'arbre d'entrée (6) et le second arbre de sortie (8) étant alors supprimée.

17. Boîte de vitesses intermédiaire à traction intégrale selon l'une des revendications 15 ou 16, **caractérisée en ce que**, pour l'établissement de la liaison solidaire en rotation entre l'arbre d'entrée (6) et le premier ou le second arbre de sortie (7 ou 8), une liaison à complémentarité de formes ou à transmission de forces est prévue.

18. Boîte de vitesses intermédiaire à traction intégrale selon l'une des revendications 1 à 17, **caractérisée en ce que**, pour le soulagement du dispositif d'entraînement (5), au niveau de l'arbre d'entrée (6) est prévu un frein électromagnétique (46) grâce auquel l'arbre d'entrée (6) est maintenu dans une position fixe en rotation en fonction d'une alimentation du frein électromagnétique (46).

19. Boîte de vitesses intermédiaire à traction intégrale selon la revendication 18, **caractérisée en ce que** le frein électromagnétique (46) comprend un élément de freinage (50), mobile de manière solidaire en rotation avec l'arbre d'entraînement (6) et dans la direction axiale de l'arbre d'entrée (6), qui établit, lorsque le frein électromagnétique (46) est alimenté, un flux de forces entre l'arbre d'entrée (6) et le frein électromagnétique (46).
